(19) Europäisches Patentamt
European Patent Office
Office européen des brevets

(11) EP 2 003 005 B1

(12) EUROPÄISCHE PATENTSCHRIFT

(45) Veröffentlichungstag und Bekanntmachung des Hinweises auf die Patenterteilung:
**11.12.2013 Patentblatt 2013/50**

(51) Int Cl.:
***B60J 3/04*** *(2006.01)*

(21) Anmeldenummer: **08009682.9**

(22) Anmeldetag: **28.05.2008**

(54) **Automatische Sonnenblende für ein Kraftfahrzeug**

Automatic sun blind for a motor vehicle

Pare-soleil automatique pour un véhicule automobile

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**

(30) Priorität: **11.06.2007 DE 102007027296**

(43) Veröffentlichungstag der Anmeldung:
**17.12.2008 Patentblatt 2008/51**

(73) Patentinhaber: **Volkswagen Aktiengesellschaft 38440 Wolfsburg (DE)**

(72) Erfinder:
• **Wilsdorf, Simone 38440 Wolfsburg (DE)**
• **Walter, Helmut 38162 Cremlingen (DE)**
• **Schieferdecker, Patrick 53913 Swisttal (DE)**

(56) Entgegenhaltungen:
**EP-A- 1 683 668          DE-A1- 19 814 094
DE-B3-102004 053 958     US-A- 5 298 732**

EP 2 003 005 B1

**Beschreibung**

Die Erfindung betrifft ein Kraftfahrzeug mit einer partiell und/oder segmentweise abdunkelbaren Windschutzscheibe, wobei eine automatische Auswahl der Position einer partiellen und/oder segmentweisen Abdunkelung der Windschutzscheibe in Abhängigkeit eines Wertes für den Stand der Sonne und eines Wertes für die Augenposition eines Insassen des Kraftfahrzeuges erfolgt.

Die DE 102 53 507 A1 offenbart ein Verfahren zum automatischen Ansteuern bzw. Steuern einer einem Kraftfahrzeug zugeordneten Sonnenschutzeinrichtung, wobei die Sonnenschutzeinrichtung in Abhängigkeit eines aktuellen Sonnenstands und von aktuellen Routendaten und -informationen, wie etwa der aktuellen Ausrichtung, der Fahrtroute und/oder der Position, des Kraftfahrzeuges relativ zur Sonne adaptiv angesteuert bzw. adaptiv gesteuert wird. Dazu wird der Sonnenstand, insbesondere der Inklinationswinkel bzw. die Sonnenhöhe sowie die Himmelsrichtung bzw. die Sonnenrichtung, aus astronomischen Daten bestimmt. Zudem ist dabei vorgesehen, dass die Ausrichtung bzw. die Fahrtroute bzw. die Position des Kraftfahrzeuges relativ zur Sonne mittels einer Videobildauswertung berechnet wird.

Die DE 100 57 795 A1 offenbart ein Verfahren zur lokal veränderbaren Abdunkelung von Fahrzeugverglasungen bzw. eines Flächenbereichs einer Scheibenfläche, wobei eine automatische Veränderung der Abdunkelung der Fahrzeugverglasungen entsprechend einer vorgebbaren Abdunkelungsstrategie erfolgt. Die Abdunkelung erfolgt dabei abhängig von der Richtung, in der sich eine störende Lichtquelle befindet. Zudem wird eine Sitzbelegung und die Sitzeinstellungen eines elektrisch verstellbaren Sitzes erfasst, wobei die Abdunkelung der Fahrzeugverglasungen abhängig von der Sitzbelegung und den Sitzeinstellungen erfolgt. Alternativ oder ergänzend wird mittels eines Navigationssystems die Richtung ermittelt, aus der die Sonneneinstrahlung erfolgt.

Die DE 198 14 094 A1 offenbart eine Vorrichtung und ein Verfahren zur Abdunkelung einer transparenten Scheibe als Schutz gegen Störungsquellen von einer Seite der Scheibe, wie störende Durchsicht, störende Lichtquelle oder störende Wärmeeinwirkungen, und/oder als Informationsanzeige, wobei die Vorrichtung örtlich selektiv elektrisch ansteuerbare Abdunkelungselemente aufweist, um die Scheibe in einem Durchtrittsbereich der Störquelle durch die Scheibe selektiv örtlich zum Bilden einer Stör- oder Blendschutzscheibe abzudunkeln oder zum Bilden einer Sicht- oder Wärmeschutzscheibe eine abgestufte Gesamtabdunkelung der Scheibe zu ermöglichen oder zum Bilden einer informationsanzeigescheibe die Scheibe örtlich selektiv zum Anzeigen von Informationen abzudunkeln.

Die DE 198 24 084 A1 offenbart eine Blendschutzeinrichtung für ein Kraftfahrzeug mit einer abdunkelbaren Filterscheibe. Dabei ist eine Steuereinheit mit Sensoren zum Erfassen eines Blendobjektes und mit einer Kamera zum Erfassen der Augenposition eines Kraftfahrzeuginsassen verbunden, Die Filterscheibe ist matrixartig ausgebildet, wobei einzelne Matrixelemente abdunkelbar sind, so dass ein abgedunkelter Bereich verzögerungsfrei auf einer Filterscheibe erzeugbar ist. Der abgedunkelte Bereich folgt dabei der Bewegung des Blendobjektes und passt sich dem Blendobjekt in seiner Größe und in seinem Abdunkelungsverhalten an.

Die DE 10 2005 007 427 A1 offenbart ein Kraftfahrzeug mit einer Fensterscheibe, insbesondere einer Windschutzscheibe, zum Abdecken eines Innenraums des Kraftfahrzeuges, wobei eine Transparenz zumindest eines Segmentes der Fensterscheibe einstellbar ist, und wobei das Kraftfahrzeug einen Blendsensor zur Messung einer Augenlidstellung und/oder einer Pupillengröße eines Insassen des Kraftfahrzeuges und eine Steuerung zur automatischen Einstellung der Transparenz des Segmentes der Fensterscheibe in Abhängigkeit eines Ausgangssignals des Blendsensors aufweist.

Die EP 1 566 300 A2 offenbart ein Kraftfahrzeug mit einer Fensterscheibe, insbesondere einer Frontscheibe, einer Rückscheibe, eines Seitenfensters bzw. eines Dachfensters, zum Abdecken eines Innenraums des Kraftfahrzeuges, wobei eine Transparenz der Fensterscheibe einstellbar ist, und wobei das Kraftfahrzeug eine Steuerung zur automatischen Einstellung der Transparenz der Fensterscheibe in Abhängigkeit eines Betriebszustandes des Kraftfahrzeuges umfasst.

Die DE 10 2004 049 091 A1 offenbart eine transparente Fahrzeugscheibe mit einem auf einem Teil ihrer Fläche durch elektrische Ansteuerung mindestens eines in einen mehrschichtigen Verbund integrierten Funktionselements mit reversibel veränderlicher Lichttransmission gegen einfallendes Licht abdunkelbaren Sichtfeld, wobei das Funktionselement mindestens einen im A-Sichtfeld eines Fahrzeuginsassen liegenden Flächenabschnitt aufweist, der als Blendschutz insbesondere gegen Scheinwerferlicht auf gleicher Fahrbahnebene entgegenkommender Fahrzeuge ansteuerbar ist, wobei das Funktionselement in mindestens drei Flächensegmente unterteilt ist, die im Sichtfeld eines Fahrzeuginsassen liegen und einzeln oder gemeinsam nach Maßgabe einer konkreten, durch mindestens einen Sensor erfassten Blendsituation abdunkelbar sind, und wobei mindestens eines der im A-Sichtfeld der Scheibe liegenden Flächensegmente bei jedem Fall einer Blendsituation abgedunkelt wird.

Die Tönung von Scheiben im Kraftfahrzeugbereich ist zudem aus der WO 92/04522 und der DE 41 28 717 A1 bekannt.

Es ist Aufgabe der Erfindung, eine verbesserte Sonnenblende für ein Kraftfahrzeug anzugeben.

Vorgenannte Aufgabe wird durch ein Kraftfahrzeug mit einer partiell und/oder segmentweise abdunkelbaren Windschutzschelbe und/oder Seitenscheibe gelöst, wobei das Kraftfahrzeug (zur Implementierung einer automatischen Sonnenblende) eine Steuerung zur automatischen Auswahl der Position einer partiellen und/oder segmentweisen Abdunkelung der Windschutzscheibe und/oder Seitenscheibe in Abhängigkeit eines Wertes für den Stand der Sonne und eines Wertes für die Augenposition eines Insassen des Kraftfahrzeuges umfasst, dadurch gekennzeichnet, dass das Kraftfahrzeug ein Bedienelement zur manuellen Korrektur der Position der partiellen und/oder segmentweisen Abdunkelung der Windschutzscheibe und/oder Seitenscheibe aufweist. Diese Ausführungsform wird nicht beansprucht. Dabei ist der Wert für die Augenposition eines Insassen des Kraftfahrzeuges in einer vorteilhaften Ausgestaltung der Erfindung (automatisch) in Abhängigkeit der manuellen Korrektur der Position der partiellen und/oder segmentweisen Abdunkelung der Windschutzscheibe und/oder Seitenscheibe korrigierbar,

Vorgenannte Aufgabe wird alternativ durch ein Kraftfahrzeug mit einer partiell und/oder segmentweise abdunkelbaren Windschutzscheibe und/oder Seitenscheibe gelöst, wobei das Kraftfahrzeug (zur Implementierung einer automatischen Sonnenblende) eine Steuerung zur automatischen Auswahl der Position einer partiellen und/oder segmentweisen Abdunkelung der Windschutzscheibe und/oder Seitenscheibe in Abhängigkeit eines Wertes für den Stand der Sonne und eines Wertes für die Augenposition eines Insassen des Kraftfahrzeuges umfasst, und wobei der Wert für die Augenposition eines Insassen des Kraftfahrzeuges (automatisch) in Abhängigkeit einer manuellen Korrektur der Position der partiellen und/oder segmentweisen Abdunkelung der Windschutzscheibe und/oder Seitenscheibe korrigierbar ist.

Diese Ausführungsform wird im Anspruch 1 beansprucht.

Eine abdunkelbare Scheibe kann insbesondere eine Scheibe mit einstellbarer Transparenz sein.

In einer weiterhin vorteilhaften Ausgestaltung der Erfindung umfasst das Kraftfahrzeug zumindest drei unterschiedlich ausgerichtete lichtsensitive Elemente, wobei der Wert für den Stand der Sonne in Abhängigkeit von Ausgangssignalen der zumindest drei unterschiedlich ausgerichteten lichtsensitiven Elemente ermittelbar ist. Dabei müssen die unterschiedlich ausgerichteten lichtsensitiven Elemente nicht orthogonal zueinander ausgerichtet sein. Eine geeignete Anordnung unterschiedlich ausgerichteter lichtsensitiver Elemente offenbart die DE 10 2004 053 958 B3,

In einer weiterhin vorteilhaften Ausgestaltung der Erfindung umfasst die Steuerung einen Blenddetektor zur Verhinderung der partiellen und/oder segmentweisen Abdunkelung der Windschutzscheibe und/oder Seitenscheibe, wenn eine Blendintensität einen Blendgrenzwert nicht überschreitet, wobei der Blendgrenzwert in einer weiterhin vorteilhaften Ausgestaltung der Erfindung mittels eines Bedienelementes einstellbar ist.

In einer weiterhin vorteilhaften Ausgestaltung der Erfindung ist die Position der partiellen und/oder segmentweisen Abdunkelung der Windschutzscheibe in Abhängigkeit eines Neigungswinkels der Windschutzscheibe einstellbar,

In einer weiterhin vorteilhaften Ausgestaltung der Erfindung ist die Position der partiellen und/oder segmentweisen Abdunkelung der Windschutzscheibe in Abhängigkeit einer Wölbung der Windschutzscheibe einstellbar.

Vorgenannte Aufgabe wird zudem in einer nicht beanspruchten Ausführungsform durch ein Kraftfahrzeug mit einer partiell und/oder segmentweise abdunkelbaren Windschutzscheibe und/oder Seitenscheibe gelöst, wobei das Kraftfahrzeug (zur Implementierung einer automatischen Sonnenblende) eine Steuerung zur automatischen Auswahl der Position einer partiellen und/oder segmentweisen Abdunkelung der Windschutzscheibe und/oder Seitenscheibe in Abhängigkeit eines Wertes für den Stand der Sonne und eines Wertes für die Augenposition eines Insassen des Kraftfahrzeuges, wenn eine Blendintensität einen Blendgrenzwert überschreitet, umfasst, wobei vorteilhafterweise vorgesehen ist, dass der Blendgrenzwert mittels eines Bedienelementes einstellbar ist.

In einer weiterhin vorteilhaften Ausgestaltung der Erfindung umfasst das Kraftfahrzeug zumindest drei unterschiedlich ausgerichtete lichtsensitive Elemente, wobei der Wert für den Stand der Sonne in Abhängigkeit von Ausgangssignalen der zumindest drei unterschiedlich ausgerichteten lichtsensitiven Elemente ermittelbar ist. In einer weiterhin vorteilhaften Ausgestaltung der Erfindung ist die Position der partiellen und/oder segmentweisen Abdunkelung der Windschutzscheibe in Abhängigkeit eines Neigungswinkels der Windschutzscheibe einstellbar.

Vorgenannte Aufgabe wird zudem in einer nicht beanspruchten Ausführungsform durch ein Kraftfahrzeug mit einer partiell und/oder segmentweise abdunkelbaren Windschutzscheibe gelöst, wobei das Kraftfahrzeug (zur Implementierung einer automatischen Sonnenblende) eine Steuerung zur automatischen Auswahl der Position einer partiellen und/oder segmentweisen Abdunkelung der Windschutzscheibe in Abhängigkeit eines Wertes für den Stand der Sonne und eines Wertes für die Augenposition eines Insassen des Kraftfahrzeuges umfasst, und wobei die Position der partiellen und/oder segmentweisen Abdunkelung der Windschutzscheibe in Abhängigkeit eines Neigungswinkels der Windschutzscheibe einstellbar ist. In einer vorteilhaften Ausgestaltung der Erfindung umfasst das Kraftfahrzeug zumindest drei unterschiedlich ausgerichtete lichtsensitive Elemente, wobei der Wert für den Stand der Sonne in Abhängigkeit von Ausgangssignalen der zumindest drei unterschiedlich ausgerichteten lichtsensitiven Elemente ermittelbar ist,

In einer vorteilhaften Ausgestaltung der Erfindung umfasst das Kraftfahrzeug Empfangsmittel zur automatischen Auswahl der Position einer partiellen und/oder segmentweisen Abdunkelung der Windschutzscheibe in Abhängigkeit eines auf die Orientierung des Fahrzeugs bezogenen relativen Wertes für den Stand der Sonne durch den Empfang von satellitengerstützten Signalen in Abhängigkeit von Datum, Uhrzeit und Standort des Kraftfahrzeugs.

In einer vorteilhaften Ausgestaltung der Erfindung umfasst das Kraftfahrzeug Mittel zur automatischen Auswahl der Position einer partiellen und/oder segmentweisen Abdunkelung der Windschutzscheibe in Abhängigkeit eines auf die Orientierung des Fahrzeugs bezogenen relativen Wertes für den Stand der Sonne oder weiterer Blendquellen mittels eines optischen Systems, insbesondere durch Verwendung einer Kamera und eines Bildverarbeitungssystems,

Vorgenannte Aufgabe wird zudem durch ein Verfahren zum Betrieb eines - eine oder mehrere der vorgenannten Merkmale umfassenden - Kraftfahrzeuges mit einer partiell und/oder segmentweise abdunkelbaren Windschutzscheibe und/oder Seitenscheibe gelöst, wobei (zur Implementierung einer automatischen Sonnenblende) die Position einer partiellen und/oder segmentweisen Abdunkelung der Windschutzscheibe und/oder Seitenscheibe automatisch in Abhängigkeit eines Wertes für den Stand der Sonne und eines Wertes für die Augenposition eines Insassen des Kraftfahrzeuges eingestellt wird, und wobei der Wert für die Augenposition eines Insassen des Kraftfahrzeuges (automatisch) in Abhängigkeit eines manuell eingebbaren Korrekturwertes der Position der partiellen und/oder segmentweisen Abdunkelung der Windschutzscheibe und/oder Seitenscheibe korrigiert wird.

In einer weiterhin vorteilhaften Ausgestaltung der Erfindung wird der Wert für den Stand der Sonne in Abhängigkeit von Ausgangssignalen zumindest dreier unterschiedlich ausgerichteter lichtsensitiver Elemente ermittelt. In einer weiterhin vorteilhaften Ausgestaltung der Erfindung erfolgt eine partielle und/oder segmentweise Abdunkelung der Windschutzscheibe und/oder Seitenscheibe nur, wenn eine Blendintensität einen Blendgrenzwert überschreitet, wobei vorteilhafterweise vorgesehen ist, dass der Blendgrenzwert mittels eines Bedienelementes einstellbar ist bzw, eingestellt wird,

In einer weiterhin vorteilhaften Ausgestaltung der Erfindung wird die Position der partiellen und/oder segmentweisen Abdunkelung der Windschutzscheibe in Abhängigkeit eines Neigungswinkels der Windschutzscheibe eingestellt.

Vorgenannten Aufgabe wird durch ein Verfahren nach Anspruch 6 gelöst.

Vorgenannte Aufgabe wird zudem durch ein Verfahren zum Betrieb eines - eine oder mehrere der vorgenannten Merkmale umfassenden - Kraftfahrzeuges mit einer partiell und/oder segmentweise abdunkelbaren Windschutzscheibe und/oder Seitenscheibe gelöst, wobei (zur Implementierung einer automatischen Sonnenblende) die Position einer partiellen und/oder segmentweisen Abdunkelung der Windschutzscheibe und/oder Seitenscheibe automatisch in Abhängigkeit eines Wertes für den Stand der Sonne und eines Wertes für die Augenposition eines Insassen des Kraftfahrzeuges eingestellt wird, und wobei eine partielle und/oder segmentweise Abdunkelung der Windschutzscheibe und/oder Seitenscheibe nur erfolgt, wenn eine Blendintensität einen Blendgrenzwert überschreitet. Diese Ausführungsform wird nicht beansprucht. Dabei ist vorteilhafterweise vorgesehen, dass der Blendgrenzwert mittels eines Bedienelementes einstellbar ist bzw. eingestellt wird.

In einer weiterhin vorteilhaften Ausgestaltung der Erfindung wird der Wert für den Stand der Sonne in Abhängigkeit von Ausgangssignalen zumindest dreier unterschiedlich ausgerichteter lichtsensitiver Elemente ermittelt. In einer weiterhin vorteilhaften Ausgestaltung der Erfindung wird die Position der partiellen und/oder segmentweisen Abdunkelung der Windschutzscheibe in Abhängigkeit eines Neigungswinkels der Windschutzscheibe eingestellt.

Vorgenannte Aufgabe wird zudem durch ein Verfahren zum Betrieb eines - eine oder mehrere der vorgenannten Merkmale umfassenden - Kraftfahrzeuges mit einer partiell und/oder segmentweise abdunkelbaren Windschutzscheibe gelöst, wobei (zur Implementierung einer automatischen Sonnenblende) die Position einer partiellen und/oder segmentweisen Abdunkelung der Windschutzscheibe automatisch in Abhängigkeit eines Wertes für den Stand der Sonne, eines Wertes für die Augenposition eines Insassen des Kraftfahrzeuges sowie eines Neigungswinkels der Windschutzscheibe eingestellt wird. Diese Ausführungsform wird nicht beansprucht. Dabei ist vorteilhafterweise vorgesehen, dass der Wert für den Stand der Sonne in Abhängigkeit von Ausgangssignalen zumindest dreier unterschiedlich ausgerichteter lichtsensitiver Elemente ermittelt wird,

In einer Ausgestaltung der vorgenannten Kraftfahrzeuge umfasst die Scheibe eine nematische Schicht, eine LCD und/oder eine SPD Schicht. Eine SPD Schicht kann abhängig von der Höhe einer angelegten Spannung eine unterschiedlich starke Tönung annehmen. Geeignete SPD Schichten sind in der US 6 522446, der US 6 606 185 und der US 6 301 040 offenbart,

Kraftfahrzeug im Sinne der Erfindung ist insbesondere ein individuell im Straßenverkehr benutzbares Landfahrzeug. Kraftfahrzeuge im Sinne der Erfindung sind insbesondere nicht auf Landfahrzeuge mit Verbrennungsmotor beschränkt.

Weitere Vorteile und Einzelheiten ergeben sich aus der nachfolgenden Beschreibung von Ausführungsbeispielen. Dabei zeigen:

Fig. 1    ein Ausführungsbeispiel eines Kraftfahrzeuges,
Fig. 2    ein Ausführungsbeispiel einer Steuerung zur automatischen Auswahl der Position einer partiellen und/oder segmentweisen Abdunkelung einer Windschutzscheibe und/oder Seitenscheibe,
Fig. 3    eine Prinzipdarstellung einer Seitenansicht einer Windschutzscheibe,
Fig. 4    eine Prinzipdarstellung einer Draufsicht einer Windschutzscheibe,
Fig. 5    eine Prinzipdarstellung einer Seitenansicht einer Windschutzscheibe,
Fig. 6    ein Ausführungsbeispiel eines Bedienelementes zur manuellen Korrektur einer partiellen und/oder segmentweisen Abdunkelung einer Windschutzscheibe,

Fig. 7     ein Ausführungsbeispiel eines Aufnehmers und

Fig. 8     ein Ausführungsbelspiel eines Sonnensensors.

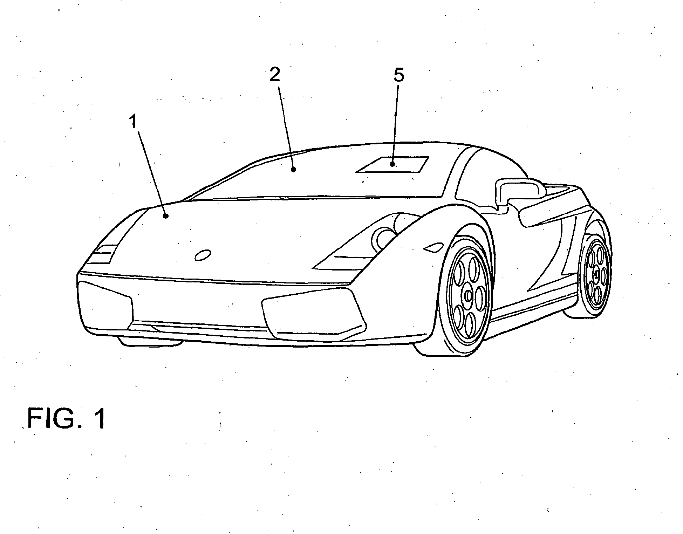

Fig. 1 zeigt ein Ausführungsbeispiel eines Kraftfahrzeuges 1. Dabei bezeichnet Bezugszeichen 2 die Windschutzscheibe des Kraftfahrzeuges 1 und Bezugszeichen 5 eine durch einen partiell bzw. segmentweise abgedunkelten Bereich der Windschutzscheibe 2 implementierte automatische Sonnenblende. Dabei ist vorgesehen, dass die Position der automatischen Sonnenblende 5 bzw. der partiellen bzw. segmentweisen Abdunkelung der Windschutzscheibe 2 in Abhängigkeit eines Wertes für den Stand der Sonne und eines Wertes für die Augenposition eines Insassen des Kraftfahrzeuges 1 erfolgt.

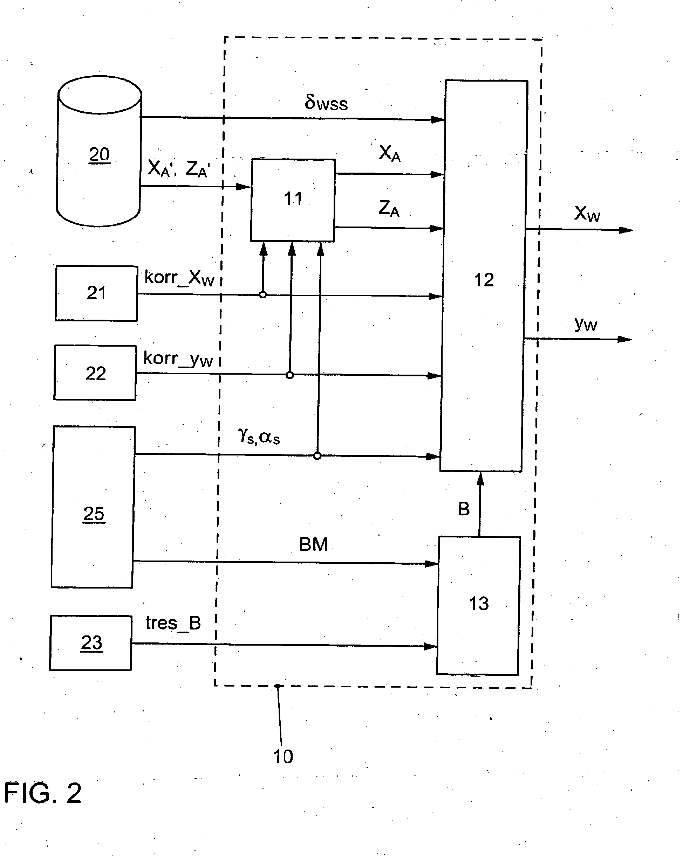

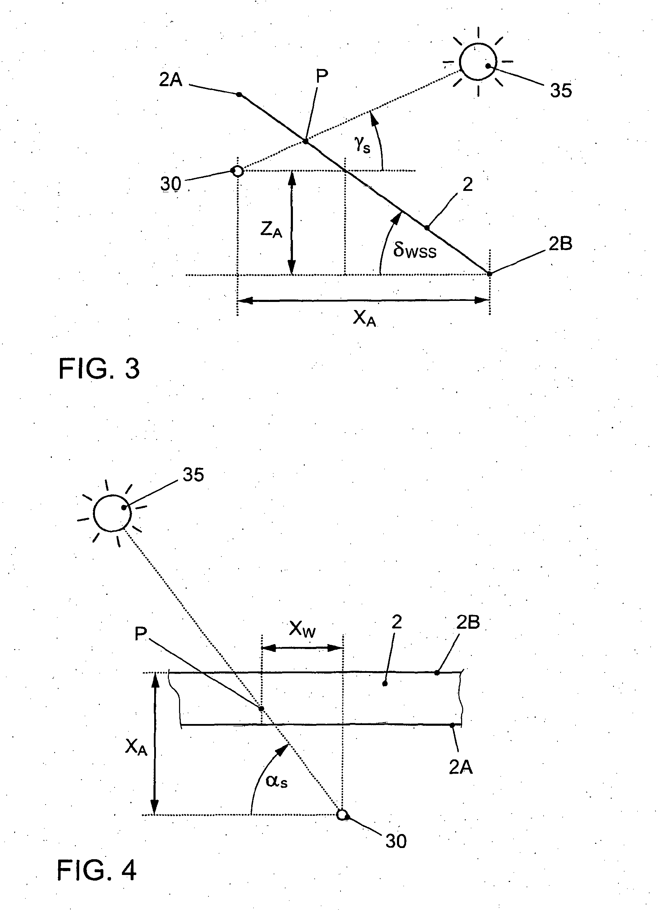

Zur Implementierung der automatischen Sonnenblende 5 ist eine in Fig. 2 dargestellte Steuerung 10 zur automatischen Auswahl der Position der automatischen Sonnenblende 5 bzw. der partiellen bzw. segmentweisen Abdunkelung der Windschutzscheibe 2 in Abhängigkeit eines Wertes $\alpha_s$ und $\gamma_s$ für den Stand der Sonne und eines Wertes $x_A$ und $z_A$ für die Augenposition eines Insassen des Kraftfahrzeuges 1 vorgesehen, wobei die internen und externen Eingangssignale bzw. Ausgangsignale der Steuerung 10 unter Bezugnahme auf Fig. 3, Fig. 4 und Fig. 5 erläutert sind. Dabei zeigen Fig. 3 und Fig, 5 eine Prinzipdarstellung

einer Seitenansicht der Windschutzscheibe 2, und Fig. 4 zeigt eine Prinzipdarstellung einer Draufsicht auf die Windschutzscheibe 2, In Fig. 2, Fig. 3, Fig. 4 und Fig. 5 bezeichnet Bezugszeichen 30 die Augenposition eines Insassen des Kraftfahrzeuges 1 mit den Koordinaten $x_A$ und $z_A$, Bezugszeichen P die Position der automatischen Sonnenblende 5 bzw. der partiellen bzw, segmentweisen Abdunkelung der Windschutzscheibe 2 mit den Koordinaten $x_w$ und $y_w$. Bezugszeichen 35 die Sonne, Bezugszeichen 2A den unteren Rand der Windschutzscheibe 2 und Bezugszeichen 2B den oberen Rand der Windschutzscheibe 2. Die Koordinaten $x_W$ und $y_W$ können z.B. den Flächenschwerpunkt der automatischen Sonnenblende 5 bestimmen. Die Koordinaten $x_W$ und $y_W$ können z.B. auch ein Segment bestimmen, das als automatische Sonnenblende 5 ausgewählt wird.

Die Steuerung 10 umfasst ein Sonnenblenden-Positionierurigsmodul 12 zur eigentlichen Bestimmung der Koordinaten $x_W$ und $y_W$ der automatischen Sonnenblende 5 bzw. der partiellen bzw. segmentweisen Abdunkelung der Windschutzscheibe 2 in Abhängigkeit der Koordinaten $x_A$ und $z_A$ der Augenposition 30 eines Insassen der Kraftfahrzeuges 1, der - mittels eines Sonnensensors 25 gemessen bzw. bestimmten - Werte $\alpha_B$ und $\gamma_S$. für den Stand der Sonne 35 sowie des - aus einem Speicher 20 ausgelesenen - Neigungswinkels $\delta_{wss}$ der Windschutzscheibe 2 gemäß der folgenden Gleichungen:

$$x_W = \tan(90° - \alpha_s) \cdot \sin\delta_{WSS} \cdot \left( \frac{x_A - \frac{z_A}{\tan\delta_{WSS}}}{\sin(180° - (\gamma_s - 10°) - \delta_{WSS})} \right), \text{ für } \gamma_s > 10°$$

*für* $\gamma_s > 10°$

$$y_W = \frac{\sin\gamma_s \cdot \left( \frac{x_A - \frac{z_A}{\tan\delta_{WSS}}}{\sin(180° - (\gamma_s - 10°) - \delta_{WSS})} \right)}{\cos(90° - \alpha_s)} + \frac{z_A}{\sin\delta_{WSS}}, \text{ für } \gamma_s > 10°$$

*für* $\gamma_S > 10°$

Eine Ausgabe der Koordinaten $x_w$ und $y_w$ der automatischen Sonnenblende 5 bzw. der partiellen bzw. segmentweisen Abdunkelung der Windschutzscheibe 2 erfolgt jedoch nur dann, wenn ein Blendflag B durch einen Wert "1" anzeigt, dass eine Blendung des Insassen des Kraftfahrzeuges 1 vorliegt. Dazu umfasst die Steuerung einen Blenddetektor 13, der den Blendflag B auf den Wert "1" setzt, wenn eine mittels des Sonnensensors 25 gemessene

Blendintensität BM einen mittels eines von einem Insassen bedienbaren Bedienelementes 23 einstellbaren Blendgrenzwert tres_B überschreitet. Durch die Einstellung des Blendgrenzwertes tres_B kann ein Insasse seine eigene Blendempfindlichkeit individuell einstellen. Darüber hinaus umfasst das Kraftfahrzeug 1 Bedienelemente 21 und 22 zur manuellen Korrektur der Koordinaten $x_w$ und $y_W$ der automatischen Sonnenblende 5 bzw. der partiellen bzw. segmentweisen Abdunkelung der Windschutzscheibe 2, wobei korr_$x_w$ einen Korrekturwert für die Koordinate $X_W$ und korr_$y_w$ einen Korrekturwert für die Koordinate $y_w$ bezeichnet.

Die Steuerung 10 umfasst zudem ein Augenpunkt-Bestimmungsmodul 11 zur Bestimmung der Koordinaten $X_A$, $Z_A$ der Augenposition 30, Dazu werden Standardwerte $x_A'$, $z_A'$ für die Koordinaten $x_A$, $z_A$ der Augenposition 30 aus dem Speicher 20 ausgelesen. Sofern keine Korrekturwerte korr_$x_w$ bzw. korr_$y_w$ vorliegen, gilt:

$$x_A = x_A{}'$$

und

$$z_A = z_A{}'$$

Wenn dagegen Korrekturwerte korr_$x_W$ bzw. korr_$y_W$ vorliegen, gilt:

$$x_A = x_A{}' + korr\_x_A$$

und

$$z_A = z_A{}' + korr\_z_A$$

wobei die Korrekturwerte korr_$x_A$ bzw. korr_$z_A$ der Koordinaten $x_A$, $z_A$ der Augenposition 30 durch Auflösen des folgenden Gleichungssystems nach korr_$x_A$ und korr_$z_A$ bestimmt werden:

$$x_W + korr\_x_W = \tan(90° - \alpha_s) \cdot \sin\delta_{WSS} \cdot \left( \frac{x_A + korr\_x_A - \dfrac{z_A + korr\_z_A}{\tan\delta_{WSS}}}{\sin(180° - (\gamma_s - 10°) - \delta_{WSS})} \right), \textit{für } \gamma_s > 10°$$

*für* $\gamma_s$>10°

$$y_W + korr\_y_W = \frac{\sin\gamma_s \cdot \left( \dfrac{x_A + korr\_x_A - \dfrac{z_A + korr\_z_A}{\tan\delta_{WSS}}}{\sin(180° - (\gamma_s - 10°) - \delta_{WSS})} \right)}{\cos(90° - \alpha_s)} + \frac{z_A + korr\_z_A}{\sin\delta_{WSS}}, \textit{für } \gamma_s > 10°$$

*für* $\gamma_s > 10°$

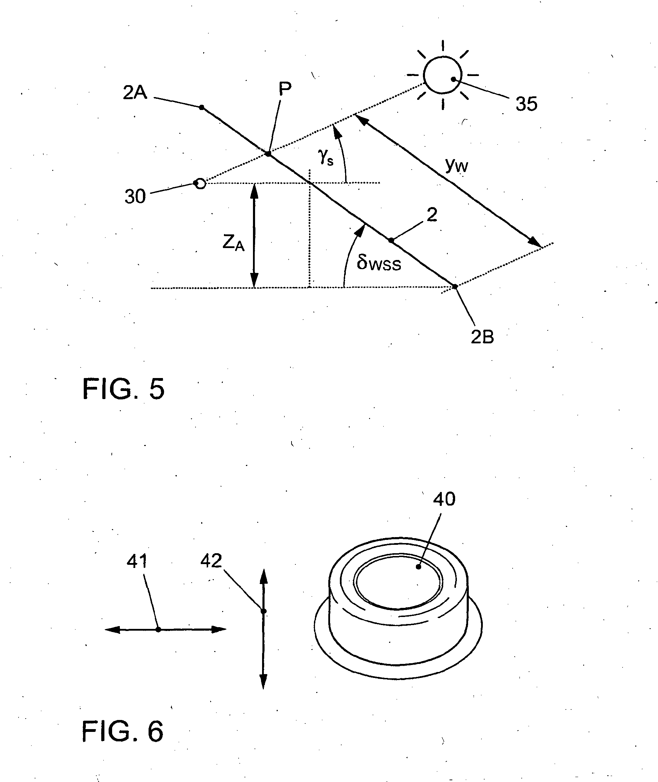

Die Bedienelemente 21, 22 und 23 können - wie in Fig. 6 dargestellt - in einem integrierten Bedienelement 40 zusammengefasst werden. Dabei kann der Blendgrenzwert tres_B durch

Drehen des Bedienelementes 40 eingestellt werden. Der Korrekturwert korr_$x_w$ kann durch Drücken des Bedienelementes 40 in Richtung des Doppelpfeils 41 eingestellt werden. Der Korrekturwert korr_$y_w$ kann durch Drücken des Bedienelementes 40 in Richtung des Doppelpfeils 42 eingestellt werden.

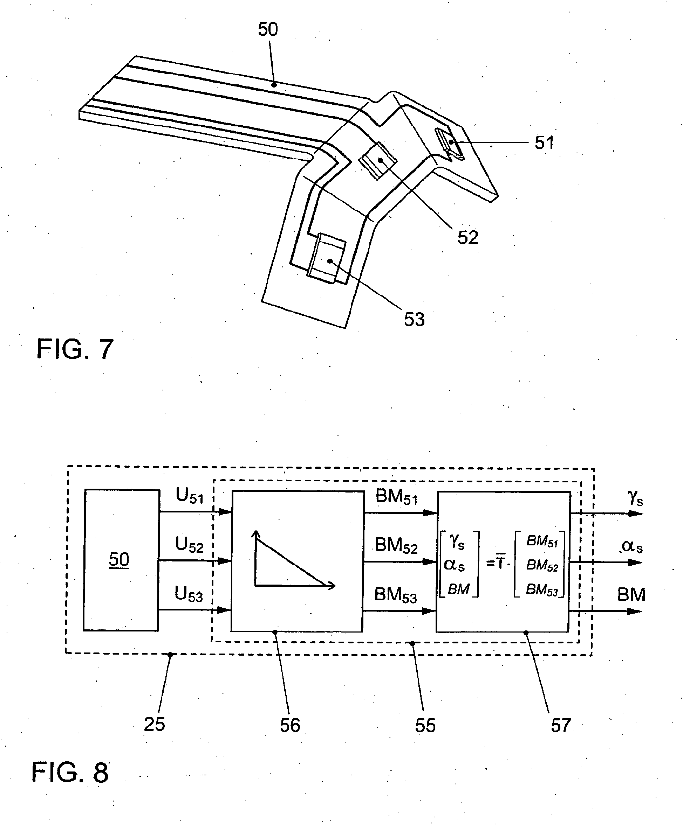

Der - detailliert in Fig. 8 dargestellte - Sonnensensor 25 umfasst in beispielhafter Ausgestaltung einen in Fig. 7 dargestellten Aufnehmer 50 mit drei unterschiedlich ausgerichteten lichtsensitiven Elementen 51, 52, 53, die z.B. von der Sonneneinstrahlung abhängige Ausgangsspannungen $U_{61}$, $U_{52}$, $U_{53}$ liefern. Der Aufnehmer 50 kann z.B. im Bereich eines Rückspiegels des Kraftfahrzeuges 1 bzw. hinter dem Rückspiegel des Kraftfahrzeuges 1 angeordnet sein. Der Sonnensensor 25 umfasst ein Auswertemodul 55 mit einem Kennlinienmodul 56 zur Umrechnung der Ausgangspan-

nungen $U_{51}$, $U_{52}$, $U_{53}$ In gemessene Blendintensitäten $BM_{51}$, $BM_{52}$, $BM_{53}$ sowie ein Transformationsmodul 57 mit einer Transformationsmatrix $\overline{T}$ zur Umrechnung der Blendintensitäten $BM_{51}$, $BM_{52}$, $BM_{53}$ in die Blendintensität BM und die Werte $\alpha_s$ und $\gamma_s$ für den Stand der Sonne 35.

Die beschriebene automatische Sonnenblende 5 kann in vereinfachter und weniger vorteilhaften Form auch dadurch implementiert werden, dass die Windschutzscheibe 2 oberhalb eines Wertes $y_w$ mit

$$y_W = \sin\gamma_s \cdot \left( \frac{x_A - \frac{z_A}{\tan\delta_{WSS}}}{\sin(180° - (\gamma_s - 10°) - \delta_{WSS})} \right) + \frac{z_A}{\sin\delta_{WSS}}, \text{ für } \gamma_s > 10°$$

*für* $\gamma_s$ > 10°

bzw. oberhalb eines Wertes $y_w$-y_tol abgedunkelt wird, wobei y_tol ein Toleranzwert ist.

Der Korrekturwert korr_$z_A$ würde sich in diesem Fall durch Auflösen der Gleichung

$$y_W + korr\_y_W = \sin\gamma_s \cdot \left( \frac{x_A - \frac{z_A + korr\_z_A}{\tan\delta_{WSS}}}{\sin(180° - (\gamma_s - 10°) - \delta_{WSS})} \right) + \frac{z_A + korr\_z_A}{\sin\delta_{WSS}}, \text{ für } \gamma_s > 10°$$

*für* $\gamma_s$ > 10°

nach korr_$Z_A$ ergeben.

Die unter Bezugnahme auf die Windschutzscheibe 2 beschriebene automatische Sonnenblende 5 ist auch für eine Seitenscheibe implementierbar.

Die Elemente in den Figuren sind unter Berücksichtigung von Einfachheit und Klarheit und nicht notwendigerweise maßstabsgetreu gezeichnet. So sind z,B. die Größenordnungen einiger Elemente übertrieben gegenüber anderen Elementen dargestellt, um das Verständnis der Ausführungsbeispiele der vorliegenden Erfindung zu verbessern.

**Bezugszeichenliste**

| | |
|---|---|
| 1 | Kraftfahrzeug |
| 2 | Windschutzscheibe |
| 2A | unterer Rand einer Windschutzscheibe |
| 2B | oberer Rand einer Windschutzscheibe |
| 5 | automatische Sonnenblende |
| 10 | Steuerunug |
| 11 | Bestimmungsmodul |
| 12 | Sonnenblenden-Positionierungsmodul |
| 13 | Blenddetektor |
| 20 | Speicher |
| 21, 22 . | Bedienelemente zur manuellen Korrektur der Koordinaten einer automatischen Sonnenblende |
| 23 | Bedienelement zur Einstellung eines Blendgrenzwertes |
| 25 | Sonnensensor |
| 30 | Augenposition |
| 35 | Sonne |
| 40 | integriertes Bedienelement |
| 41, 42 | Doppelpfeil |
| 50 | Aufnehmer |
| 51, 52, 53 | lichtsensitives Element |
| 55 | Auswertemodul |

| 56 | Kennlinienmodul |
|---|---|
| 57 | Transformationsmodul |
| B, $BM_{51}$, $BM_{52}$, $BM_{53}$ | Blendflag |
| BM | gemessene Blendintensität |
| korr_$x_W$, korr_$z_W$ | Korrekturwert für eine Koordinate / einen Wert einer Position einer automatischen Sonnenblende |
| tres_B | Blendgrenzwert |
| P | Position einer automatischen Sonnenblende |
| $U_{51}$, $U_{52}$, $U_{53}$ | Ausgangspannung |
| $x_A$, $z_A$ | Koordinate / Wert einer Augenposition |
| $X_A{}'$, $Z_A{}'$ | Standardwert für eine Koordinate / einen Wert einer Augenposition |
| $x_w$, $y_w$ | Koordinate / Wert einer Position einer automatischen Sonnenblende |
| $\alpha_s$, $\gamma_s$ | Wert für den Stand der Sonne |
| $\underline{\delta}_{wss}$ | Neigungswinkels einer Windschutzscheibe |
| $\underline{T}$ | Transformationsmatrix |

**Patentansprüche**

1. Kraftfahrzeug (1) mit einer partiell und/oder segmentweise abdunkelbaren Windschutzscheibe (2) und/oder Seitenscheibe, wobei das Kraftfahrzeug zur Implementierung einer automatischen Sonnenblende eine Steuerung (10) zur automatischen Auswahl der Position (P) einer partiellen und/oder segmentweisen Abdunkelung (5) der Windschutzscheibe (2) und/oder Seitenscheibe in Abhängigkeit eines Wertes ($\alpha_s$, $\gamma_s$) für den Stand der Sonne (35) und eines Wertes ($X_A$, $Z_A$) für die Augenposition (30) eines Insassen des Kraftfahrzeuges umfasst, **dadurch gekennzeichnet, dass** der Wert ($x_A$, $z_A$) für die Augenposition (30) eines Insassen des Kraftfahrzeuges (1) in Abhängigkeit einer manuellen Korrektur der Position (P) der partiellen und/oder segmentweisen Abdunkelung (5) der Windschutzscheibe (2) und/oder Seitenscheibe korrigierbar ist.

2. Kraftfahrzeug (1) nach Anspruch 1, **dadurch gekennzeichnet, dass** das Kraftfahrzeug (1) zumindest drei unterschiedlich ausgerichtete lichtsensitive Elemente (51, 52, 54) umfasst, wobei der Wert ($\alpha_s$, $\gamma_s$) für den Stand der Sonne (35) in Abhängigkeit von Ausgangssignalen der zumindest drei unterschiedlich ausgerichteten lichtsensitiven Elemente (51, 52, 54) ermittelbar ist.

3. Kraftfahrzeug (1) nach Anspruch 1 oder 2, **dadurch gekennzeichnet, dass** die Steuerung (10) einen Blenddetektor (13) zur Verhinderung der partiellen und/oder segmentweisen Abdunkelung (5) der Windschutzscheibe (2) und/oder Seitenscheibe, wenn eine Blendintensität (BM) einen Blendgrenzwert (tres_B) nicht überschreitet, umfasst.

4. Kraftfahrzeug (1) nach Anspruch 3, **dadurch gekennzeichnet, dass** der Blendgrenzwert (tres_B) mittels eines Bedienelementes (23) einstellbar ist.

5. Kraftfahrzeug (1) nach einem der vorhergehenden Ansprüche, **dadurch gekennzeichnet, dass** die Position (P) der partiellen und/oder segmentweisen Abdunkelung (5) der Windschutzscheibe (2) in Abhängigkeit eines Neigungswinkels ($\delta_{WSS}$) der Wndschutzscheibe (2) einstellbar ist.

6. Verfahren zum Betrieb eines Kraftfahrzeuges (1) mit einer partiell und/oder segmentweise abdunkelbaren Windschutzscheibe (2) und/oder Seitenscheibe, wobei zur Implementierung einer automatischen Sonnenblende die Position (P) einer partiellen und/oder segmentweisen Abdunkelung (5) der Windschutzscheibe (2) und/oder Seitenscheibe automatisch in Abhängigkeit eines Wertes ($\alpha_s$, $\gamma_s$) für den Stand der Sonne (35) und eines Wertes ($x_A$, $z_A$) für die Augenposition (30) eines Insassen des Kraftfahrzeuges (1) eingestellt wird, **dadurch gekennzeichnet, dass** der Wert ($x_A$, $z_A$) für die Augenposition (30) eines Insassen des Kraftfahrzeuges (1) automatisch in Abhängigkeit eines manuell eingebbaren Korrekturwertes der Position (P) der partiellen und/oder segmentweisen Abdunkelung (5) der Windschutzscheibe (2) und/oder Seitenscheibe korrigiert wird.

7. Verfahren nach Anspruch 6, **dadurch gekennzeichnet, dass** der Wert ($\alpha_s$, $\gamma_s$) für den Stand der Sonne (35) in Abhängigkeit von Ausgangssignalen zumindest dreier unterschiedlich ausgerichteter lichtsensitiver Elemente (51, 52, 54) ermittelt wird.

8. Verfahren nach Anspruch 6 oder 7, **dadurch gekennzeichnet, dass** eine partielle und/oder segmentweise Abdunkelung (5) der Windschutzscheibe (2) und/oder Seitenscheibe nur erfolgt, wenn eine Blendintensität (BM) einen Blendgrenzwert (tres_B) überschreitet.

9. Verfahren nach Anspruch 8, **dadurch gekennzeichnet, dass** der Blendgrenzwert (tres_B) mittels eines Bedienelementes (23) einstellbar ist bzw. eingestellt wird.

10. Verfahren nach einem der Ansprüche 6 bis 9, **dadurch gekennzeichnet, dass** die Position (P) der partiellen und/oder segmentweisen Abdunkelung (5) der Windschutzscheibe (2) in Abhängigkeit eines Neigungswinkels ($\delta_{WSS}$) der Windschutzscheibe (2) eingestellt wird.

## Claims

1. Motor vehicle (1) having a windscreen (2) and/or side window which can be darkened partially and/or in segments, the motor vehicle comprising, for the purpose of implementing an automatic sun blind, a controller (10) for automatically selecting the position (p) of a partial and/or segmental darkening (5) of the windscreen (2) and/or side window as a function of a value ($\alpha_s$, $\gamma_s$) for the position of the sun (35) and of a value ($x_A$, $z_A$) for the eye position (30) of an occupant of the motor vehicle, **characterized in that** the value ($x_A$, $z_A$) for the eye position (30) of an occupant of the motor vehicle (1) can be corrected as a function of a manual correction of the position (P) of the partial and/or segmental darkening (5) of the windscreen (2) and/or side window.

2. Motor vehicle (1) according to Claim 1, **characterized in that** the motor vehicle (1) comprises at least three differently aligned light-sensitive elements (51, 52, 54), it being possible to determine the value ($\alpha_s$, $\gamma_s$) for the position of the sun (35) as a function of output signals of the at least three differently aligned light-sensitive elements (51, 52, 54).

3. Motor vehicle (1) according to Claim 1 or 2, **characterized in that** the controlled (10) comprises a glare detector (13) for preventing the partial and/or segmental darkening (5) of the windscreen (2) and/or side window when a glare intensity (BM) does not exceed a glare limit (tres_B).

4. Motor vehicle (1) according to Claim 3, **characterized in that** the glare limit (tres_B) can be set by means of an operational control (23).

5. Motor vehicle (1) according to one of the preceding claims, **characterized in that** the position (P) of the partial and/or segmental darkening (5) of the windscreen (2) can be set as a function of an inclination angle ($\delta_{WSS}$) of the windscreen (2).

6. Method for operating a motor vehicle (1) having a windscreen (2) and/or side window which can be darkened partially and/or in segments, for the purpose of implementing an automatic sun blind the position (P) of a partial and/or segmental darkening (5) of the windscreen (2) and/or side window being set automatically as a function of a value ($\alpha_s$, $\gamma_s$) for the position of the sun (35) and of a value ($x_A$, $z_A$) for the eye position (30) of an occupant of the motor vehicle (1), **characterized in that** the value ($x_A$, $z_A$) for the eye position (30) of an occupant of the motor vehicle (1) is corrected automatically as a function of a correction value, which can be input manually, of the position (P) of the partial and/or segmental darkening (5) of the windscreen (2) and/or side window.

7. Method according to Claim 6, **characterized in that** the value ($\alpha_s$, $\gamma_s$) for the position of the sun (35) is determined as a function of output signals of at least three differently aligned light-sensitive elements (51, 52, 54).

8. Method according to Claim 6 or 7, **characterized in that** a partial and/or segmental darkening (5) of the windscreen (2) and/or side window takes place only when a glare intensity (BM) exceeds a glare limit (tres_B).

9. Method according to Claim 8, **characterized in that** the glare limit (tres_B) can be, or is, set by means of an operational control (23).

10. Method according to one of Claims 6 to 9, **characterized in that** the position (P) of the partial and/or segmental darkening (5) of the windscreen (2) is set as a function of an inclination angle ($\delta_{WSS}$) of the windscreen (2).

**Revendications**

1. Véhicule automobile (1) doté d'un pare-brise (2) et/ou d'une vitre latérale pouvant être obscurcis partiellement et/ou sur certaines sections, le véhicule automobile comprenant, pour la mise en oeuvre d'un pare-soleil automatique, un élément de commande (10) réalisant la sélection automatique de la position (P) d'un obscurcissement (5) partiel et/ou sur certaines sections du pare-brise (2) et/ou de la vitre latérale en fonction d'une valeur ($\alpha_S$, $\gamma_S$) correspondant au niveau du soleil (35) et d'une valeur ($X_A$, $Z_A$) correspondant à la position des yeux (30) d'un passager du véhicule automobile, **caractérisé en ce que** la valeur ($X_A$, $Z_A$) correspondant à la position des yeux (30) d'un passager du véhicule automobile (1) peut être corrigée en fonction d'une correction manuelle de la position (P) de l'obscurcissement (5) partiel et/ou sur certaines sections du pare-brise (2) et/ou de la vitre latérale.

2. Véhicule automobile (1) selon la revendication 1, **caractérisé en ce que** le véhicule automobile (1) comprend au moins trois éléments (51, 52, 54) luminosensibles orientés différemment, la valeur ($\alpha_S$, $\gamma_S$) correspondant au niveau du soleil (35) étant calculée en fonction des signaux de sortie des au moins trois éléments (51, 52, 54) luminosensibles orientés différemment.

3. Véhicule automobile (1) selon la revendication 1 ou 2, **caractérisé en ce que** l'élément de commande (10) comporte un détecteur d'éblouissement (13) permettant d'empêcher l'obscurcissement (5) partiel et/ou sur certaines sections du pare-brise (2) et/ou de la vitre latérale lorsqu'une intensité d'éblouissement (BM) ne dépasse pas une valeur limite d'éblouissement (tres_B).

4. Véhicule automobile (1) selon la revendication 3, caractérisé en que la valeur limite d'éblouissement (tres_B) peut être réglée à l'aide d'un élément de commande (23).

5. Véhicule automobile (1) selon l'une quelconque des revendications précédentes, **caractérisé en ce que** la position (P) de l'obscurcissement (5) partiel et/ou sur certaines sections du pare-brise (2) peut être réglée en fonction d'un angle d'inclinaison ($\delta_{WSS}$) du pare-brise (2).

6. Procédé de fonctionnement d'un véhicule automobile (1) doté d'un pare-brise (2) et/ou d'une vitre latérale pouvant être obscurcis partiellement et/ou sur certaines sections, la position (P) d'un obscurcissement (5) partial et/ou sur certaines sections du pare-brise (2) et/ou de la vitre latérale étant réglée automatiquement pour la mise en oeuvre d'un pare-soleil automatique en fonction d'une valeur ($\alpha_S$, $\gamma_S$) correspondant au niveau du soleil (35) et d'une valeur ($X_A$, $Z_A$) correspondant à la position des yeux (30) d'un passager du véhicule automobile (1), **caractérisé en ce que** la valeur ($X_A$, $Z_A$) correspondant à la position des yeux (30) d'un passager du véhicule automobile (1) peut être corrigée automatiquement en fonction d'une valeur de correction entrée manuellement de la position (P) de l'obscurcissement (5) partiel et/ou sur certaines sections du pare-brise (2) et/ou de la vitre latérale.

7. Procédé selon la revendication 6, **caractérisé en ce que** la valeur ($\alpha_S$, $\gamma_S$) correspondant au niveau du soleil (35) est calculée en fonction des signaux de sortie des au moins trois éléments (51, 52, 54) luminosensibles orientés différemment.

8. Procédé selon la revendication 6 ou 7, **caractérisé en ce qu'**un obscurcissement (5) partiel et/ou sur certaines sections du pare-brise (2) et/ou de la vitre latérale ne se produit que lorsqu'une intensité d'éblouissement (BM) dépasse une valeur limite d'éblouissement (tres_B).

9. Procédé selon la revendication 8, **caractérisé en ce que** la valeur limite d'éblouissement (tres_B) peut être réglée et/ou est réglée à l'aide d'un élément de commande (23).

10. Procédé selon l'une quelconque des revendications 6 à 9, **caractérisé en ce que** la position (P) de l'obscurcissement (5) partiel et/ou sur certaines sections du pare-brise (2) est réglée en fonction d'un angle d'inclinaison ($\delta_{WSS}$) du pare-brise (2).

FIG. 1

FIG. 2

FIG. 3

FIG. 4

FIG. 5

FIG. 6

FIG. 7

FIG. 8

**EP 2 003 005 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 10253507 A1
- DE 10057795 A1
- DE 19814094 A1
- DE 19824084 A1
- DE 102005007427 A1
- EP 1566300 A2
- DE 102004049091 A1
- WO 9204522 A
- DE 4128717 A1
- DE 102004053958 B3
- US 6522446 B
- US 6606185 B
- US 6301040 B